# EUROPÄISCHE PATENTSCHRIFT

(11) **EP 0 972 952 B1**
(45) Veröffentlichungstag und Bekanntmachung des Hinweises auf die Patenterteilung: **26.07.2006**
(21) Anmeldenummer: 99810588.6
(22) Anmeldetag: 05.07.1999
(51) Int. Cl.: F16B 19/14, B25C 1/00, F16B 15/08

(54) **Nagelmagazin**
Nail magazin
Magasin de clous

(30) Priorität: 13.07.1998 DE 19831371
(43) Veröffentlichungstag der Anmeldung: 19.01.2000
(73) Patentinhaber: HILTI Aktiengesellschaft, 9494 Schaan (LI)
(72) Erfinder: Rohrmoser, Günter, 6812 Meiningen (AT); Hasler, Roland, 9491 Vaduz (LI)
(74) Vertreter: Wildi, Roland

(56) Entgegenhaltungen:
- EP-A- 0 237 476
- EP-A- 0 502 667
- EP-A- 0 790 104
- US-A- 5 443 345

## Beschreibung

Die Erfindung betrifft ein Nagelmagazin für nagelförmige Befestigungselemente gemäss dem Oberbegriff des Patentanspruchs 1.

Zur Befestigung von dünnwandigen Bauteilen an einem Untergrund werden beispielsweise Setzgeräte verwendet, mit deren Hilfe nagelförmige Befestigungslemente, wie sie beispielsweise aus der US-PS 5 443 345 bekannt sind, durch das Bauteil hindurch in den Untergrund eintreibbar sind. Um einerseits ein spielfreies Anliegen des Bauteiles an dem Untergrund gewährleisten zu können, andererseits eine vom Setzgerät erzeugte, auf das Befestigungselement wirkende Überenergie entsprechend dämpfen zu können, wird zusammen mit dem nagelförmigen Befestigungselement eine parallel zur Setzrichtung elastisch verformbare Führungshülse verwendet, die zudem teilweise der Führung des Befestigungselementes in einem Führungsrohr eines Setzgerätes dient.

Mehrere nebeneinander sowie in einer Reihe im Abstand voneinander angeordnete Führungshülsen sind über seitliche von den Führungshülsen abragende Verbindungsstege miteinander trennbar verbunden und bilden zusammen ein Nagelmagazin. Jeweils zwei Verbindungsstege, die in einer parallel zur Längsachse der Führungshülse verlaufenden Richtung voneinander beabstandet sind, sind zwischen zwei Führungshülsen angeordnet. Jede Führungshülse weist eine zentrale, parallel zur Längsachse der Führungshülse verlaufende Aufnahmebohrung auf, die der Aufnahme des nagelförmigen Befestigungslementes dient. In einem mittleren Abschnitt besitzt jede Führungshülse eine senkrecht zur Längsachse der Führungshülse sowie senkrecht zur Längserstreckung des Nagelmagazins verlaufende Durchtrittsöffnung.

Da die beiden Endbereiche der bekannten Führungshülse zwei unterschiedliche Querschnittsflächen aufweisen, kann nur der setzrichtungsseitige, eine grössere Querschnittsfläche aufweisende Endbereich zur Führung der Führungshülse und des Befestigungselementes in dem Führungsrohr des Setzgerätes beitragen. In dem entgegen der Setzrichtung weisenden Enbereich erfolgt die Führung des Befestigungselementes in dem Führungsrohr über einen Kopf des Befestigungselementes, dessen Querschnittsfläche im wesentlichen der Querschnittsfläche des setzrichtungsseitigen Endbereiches der Führungshülse entspricht. Da der Kopf des Befestigungselementes in direkten Kontakt mit einer Innenwandung des Führungsrohres gelangen kann, ergibt sich eine Abnützung an der Innenwandung des Führungsrohres, die zu einer schlechten Führung des Befestigungslementes in dem Führungsrohr führen kann. Ein weiterer Nachteil dieser bekannten Führungshülse besteht darin, dass das Nagelmagazin in einer senkrecht zur Längsachse verlaufenden Ebene eine geringe Steifigkeit aufweist.

Der Erfindung liegt die Aufgabe zugrunde, ein wirtschaftich herstellbares Nagelmagazin zu schaffen, bei dem jede Führungshülse eine gute Führung des Befestigungselementes in dem Führungsrohr gewährleistet sowie eine Abnützung der Innenwandung des Führungsrohres verhindert und bei dem die Verbindungsstege einerseits dem Nagelmagazin eine hohe Steifigkeit verleihen, andererseits gut durchtrennbar sind.

Die Lösung dieser Aufgabe erfolgt durch ein Nagelmagazin, welches die im kennzeichnenden Abschnitt des Patentanspruchs 1 angeführten Merkmale aufweist.

Die beiden Endbereiche gewährleisten aufgrund ihrer gleich grossen Querschnitte eine ausgezeichnet Führung des Befestigungselementes in dem Führungsrohr des Setzgerätes. Da der Kopf des Befestigungselementes mit der Innenwandung des Führungsrohres nicht in Kontakt gelangen kann, wird eine Abnützung der Innenwandung des Führungsrohres verhindert. Die kreuzförmig ausgebildeten Querschnittsflächen der Verbindungsstege verleihen dem Nagelmagazin sowohl in einer parallel zur Längsachse der Führungshülsen, als auch in einer senkrecht zur Längsachse der Führungshülsen verlaufenden Eben eine hohe Steifigkeit.

Da jeweils zwei Führungshülsen über zwei parallel zur Längsachse der Führungshülse im Abstand voneinander beabstandete Verbindungsstege miteinander verbunden sind, weist das Nagelmagazin trotz der geringen, parallel zur Längsachse der Führungshülse verlaufenden Erstreckung der Verbindungsstege eine hohe Steifigkeit in einer parallel zur Längsachse der Führungshülsen verlaufenden Ebene auf. Vorteilhafterweise entspricht die Erstreckung der kreuzförmigen Querschnittsfläche in einer parallel zur Längsachse der Führungshülse verlaufenden Richtung der 0,1 bis 0,3-fachen Länge der gesamten Führungshülse.
Über die Grösse der Erstreckung des Verbindungssteges in der senkrecht zur Längsachse der Führungshülse verlaufenden Richtung ist der Grad der Steifigkeit des Nagelmagazins in einer senkrecht zur Längsachse der Führungshülsen liegenden Ebene beeinflussbar. Zweckmässigerweise entspricht die Erstreckung der Querschnittsfläche der Verbindungsstege, in einer senkrecht zur Längsachse der Führungshülse verlaufenden Richtung der 0,3- bis 1-fachen Erstreckung des zentralen Bereiches in der senkrecht zur Längsachse der Führungshülse verlaufenden Richtung.

Um der gesamten Führungshülse eine höhere Steifigkeit verleihen zu können, erstreckt sich zweckmässigerweise zwischen den Verbindungsstegen ein parallel zur Längsachse der Führungshülsen verlaufender Mittelsteg.

Die Erfindung wird anhand von Zeichnungen, die ein Ausführungsbeispiel wiedergeben, näher erläutert. Es zeigen:
- Fig.1: einen Teil eines erfindungsgemässen Nagelmagazines;
- Fig. 2: einen Schnitt durch das Nagelmagazin entlang der Linie II-II in Fig. 1.

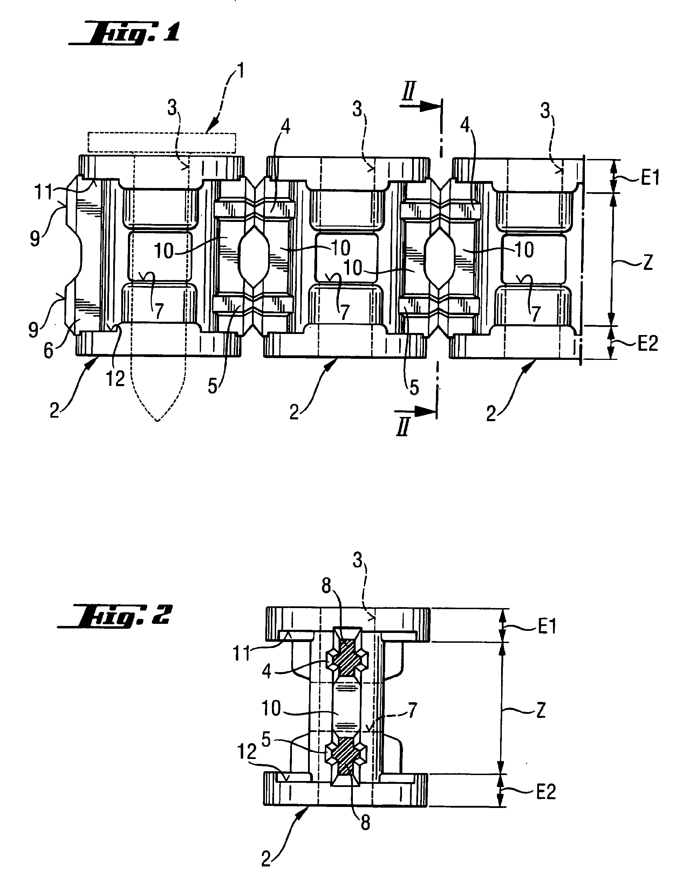

Das in den Fig. 1 und 2 dargestellte Nagelmagazin weist mehrere miteinander verbundene Führungshülsen 2 auf, die nebeneinander sowie in einer Reihe und im Abstand voneinander angeordnet sind. Jede der Führungshülsen 2 weist eine zentrale, parallel zur Längsachse der Führungshülse 2 verlaufende Aufnahmebohrung 3 auf, die der Aufnahme eines Befestigungselementes 1 dient, wie es in der Fig. 1 strichliert dargestellt ist. Die Führungshülse 2 weist zwei Endbereiche E1, E2 mit gleichen Querschnitten auf. Zwischen beiden Endbereichen E1, E2 weist die Führungshülse 2 eine senkrecht zur Längsachse der Führungshülse 2 sowie senkrecht zur Längserstreckung des Nagelmagazins verlaufende Durchtrittsöffnung 7 auf, die die Aufnahmebohrung 3 schneidet.

Der Verbindung von jeweils zwei Führungshülsen 2 dienen zwei radial von der Führungshülse 2 abragende Verbindungsstege 4, 5, die in einer parallel zur Längsachse der Führungshülsen 2 verlaufenden Richtung voneinander beabstandet sind.

Sämtliche Verbindungsstege 4, 5 des Nagelmagazines weisen an einem zwischen zwei Führungshülsen 2 liegenden Bereich eine kreuzförmige Querschnittsfläche 8 auf. Die Erstreckung dieser Querschnittsfläche 8 in einer senkrecht zur Längsachse der Führungshülse 2 verlaufenden Richtung entspricht im wesentlichen der 0,25-fachen Erstreckung eines Endbereiches in der senkrecht zur Längsachse der Führungshülse verlaufenden Richtung. Die Erstreckung der Querschnittsfläche 8 in einer parallel zur Längsachse der Führungshülse 2 verlaufenden Richtung entspricht im wesentlichen der 0,2-fachen Länge der gesamten Führungshülse 2.

Die Verbindungsstege 6 der im Endbereich des Nagelmagazins angeordneten Führungshülsen 2 weisen eine rechteckige Querschnittsfläche 9 mit einem Bereich auf, der eine parallel zur Längsachse der Führungshülse 2 verlaufende Erstreckung aufweist, die im wesentlichen der 0,2-fachen Länge der gesamten Führungshülse 2 entspricht.

Die beiden Endbereiche E1, E2 weisen zwei einander zugewandte Führungsflächen 11, 12 auf, die der axialen Führung der Führungshülsen 2 bzw. des Nagelmagazins in einer entsprechend ausgebildeten, nicht dargestellten Führungsschiene dienen.

## Patentansprüche

1. Nagelmagazin mit mehreren, der Aufnahme eines nagelförmigen Befestigungselementes (1) dienenden, miteinander verbundenen Führungshülsen (2), die nebeneinander, sowie in einer Reihe axial voneinander beabstandet angeordnet sind, wobei jede der Führungshülsen (2) einen ersten und zweiten Endbereich (E1, E2), eine zentrale parallel zur Längsachse der Führungshülse (2) verlaufende Aufnahmebohrung (3), eine zwischen beiden Endbereichen (E1, E2) angeordnete, senkrecht zur Längsachse der Führungshülse (2) sowie senkrecht zur Längserstreckung des Nagelmagazins verlaufende Durchtrittsöffnung (7) aufweist und auf zwei einander gegenüberliegenden Seiten über jeweils zwei Verbindungsstege (4, 5) miteinander verbunden sind, die in einer parallel zur Längsachse der Führungshülse (2) verlaufenden Richtung voneinander beabstandet sind, **dadurch gekennzeichnet, dass** die beiden Endbereiche (E1, E2) der Führungshülsen die gleichen Querschnitte aufweisen und dass die Verbindungsstege (4, 5) wenigstens einen Bereich mit einer kreuzförmig ausgebildete Querschnittsfläche (8) aufweisen.

2. Nagelmagazin nach Anspruch 1, **dadurch gekennzeichnet, dass** die Erstreckung der Querschnittsflächen (8) in einer parallel zur Längsachse der Führungshülse (2) verlaufenden Richtung der 0,1- bis 0,3-fachen Länge der gesamten Führungshülse (2) entspricht.

3. Nagelmagazin nach Anspruch 1 oder 2, **dadurch gekennzeichnet, dass** die Erstreckung der Querschnittsfläche (8) in einer senkrecht zur Längsachse der Führungshülse (2) verlaufenden Richtung der 0,3- bis 1-fachen Erstreckung des zentralen Bereiches (Z) in der senkrecht zur Längsachse der Führungshülse (2) verlaufenden Richtung entspricht.

4. Nagelmagazin nach einem der Ansprüche 1 bis 3, **dadurch gekennzeichnet, dass** sich parallel zur Längsachse der Führungshülsen (2) zwischen den Verbindungsstegen (4, 5) ein Mittelsteg (10) erstreckt.

## Claims

1. Nail magazine comprising a plurality of guide sleeves (2) connected together, each serving to receive a nail-shaped fastening element (1) and arranged alongside one another in a row axially at a distance from one another, each of the guide sleeves (2) having a first and a second end region (E1, E2), a central locating hole (3) extending parallel to the longitudinal axis of the guide sleeve (2) and a through opening (7) arranged between the two end regions (E1, E2) and extending perpendicularly to the longitudinal axis of the guide sleeve (2) and perpendicularly to the longitudinal extent of the nail magazine, and the guide sleeves being connected together on two opposing sides by means of two respective connecting webs (4, 5) arranged at a distance from one another in a direction extending parallel to the longitudinal axis of the guide sleeve (2), **characterised in that** the two end regions (E1, E2) of the guide sleeves have the same cross sections and that the connecting webs (4, 5) have at least one region with a cross-shaped cross-sectional area (8).

2. Nail magazine according to claim 1, **characterised in that** the extent of the cross-sectional areas (8) in a direction extending parallel to the longitudinal axis of the guide sleeve (2) corresponds to 0.1 to 0.3 times the length of the entire guide sleeve (2).

3. Nail magazine according to claim 1 or claim 2, **characterised in that** the extent of the cross-sectional area (8) in a direction extending perpendicularly to the longitudinal axis of the guide sleeve (2) corresponds to 0.3 to 1 times the extent of the central region (Z) in the direction extending perpendicularly to the longitudinal axis of the guide sleeve (2).

4. Nail magazine according to one of claims 1 to 3, **characterised in that** a central web (10) extends between the connecting webs (4, 5) parallel to the longitudinal axis of the guide sleeves (2).

## Revendications

1. Magasin de clous avec plusieurs manchons de guidage (2) qui sont reliés entre eux, servent à recevoir un élément de fixation en forme de clou (1) et sont disposés côte à côte ainsi qu'à distance axiale mutuelle sur une rangée, chacun des manchons de guidage (2) comportant une première et une seconde zone d'extrémité (E1, E2), un trou récepteur central (3) s'étendant parallèlement à l'axe longitudinal du manchon de guidage (2), une ouverture traversante (7) située entre les deux zones d'extrémité (E1, E2) et orientée perpendiculairement à l'axe longitudinal du manchon de guidage (2) ainsi que perpendiculairement à l'extension longitudinale du magasin de clous, et qui sont reliés entre eux sur deux côtés en vis-à-vis par l'intermédiaire à chaque fois de deux barrettes de liaison (4, 5), lesquelles sont distantes l'une de l'autre dans une direction parallèle à l'axe longitudinal du manchon de guidage (2), **caractérisé en ce que** les deux zones d'extrémité (E1, E2) des manchons de guidage présentent les mêmes sections transversales et **en ce que** les barrettes de liaison (4, 5) présentent au moins une zone avec une surface de section transversale conformée en croix (8).

2. Magasin de clous selon la revendication 1, **caractérisé en ce que** l'extension des surfaces de section transversale (8) dans une direction parallèle à l'axe longitudinal du manchon de guidage (2) correspond à 0,1 à 0,3 fois la longueur de tout le manchon de guidage (2).

3. Magasin de clous selon la revendication 1 ou 2, **caractérisé en ce que** l'extension de la surface de section transversale (8) dans une direction perpendiculaire à l'axe longitudinal du manchon de guidage (2) correspond à 0,3 à 1 fois l'extension de la zone centrale (Z) dans la direction perpendiculaire à l'axe longitudinal du manchon de guidage (2).

4. Magasin de clous selon une des revendications 1 à 3, **caractérisé en ce qu'**une barrette médiane (10) s'étend entre les barrettes de liaison (4, 5) parallèlement à l'axe longitudinal des manchons de guidage (2).
